(19) Europäisches Patentamt
European Patent Office
Office européen des brevets

(11) Numéro de publication : **0 607 725 A1**

# (12) DEMANDE DE BREVET EUROPEEN

(21) Numéro de dépôt : **93403213.7**

(22) Date de dépôt : **30.12.93**

(51) Int. Cl.[5] : **C08G 18/38,** C08G 18/50, C08G 18/76, C08G 18/48, // (C08G18/38, 101:00), (C08G18/48, 101:00), (C08G18/76, 101:00)

La demande pour ajouter la désignation de l'Autriche, qui nous est parvenue en dehors du délai prévu, parsuite d'une interruption de la distribution du courrier, est en examen.

(30) Priorité : **31.12.92 FR 9216000**
**15.03.93 FR 9302943**

(43) Date de publication de la demande : **27.07.94 Bulletin 94/30**

(84) Etats contractants désignés : **BE DE DK ES FR GB GR IE IT LU NL PT**

(71) Demandeur : **EFISOL**
**5 rue du Dôme**
**F-75116 Paris (FR)**

(72) Inventeur : **de Woillemont, Simone**
**255, avenue du Maréchal Juin**
**F-92100 Boulogne (FR)**

(74) Mandataire : **Hirsch, Marc-Roger et al**
**Cabinet Hirsch**
**34 rue de Bassano**
**F-75008 Paris (FR)**

## (54) Utilisation d'alliages de forgeage et de moulage ainsi que de métaux d'apport pour des pièces venant en contact avec de l'oleum ou de l'acide sulfurique concentré chaud, procédé pour la préparation d'acide sulfurique et procédé de conentration et de ...

(57) L'invention a pour objet une mousse polyuréthane, rigide, à cellules ouvertes, obtenue à partir de diisocyanate(s), de polyol(s) et d'un agent gonflant, caractérisée en ce que ladite mousse présente une absorption acoustique moyenne supérieure à 0,3 sur l'intervalle de fréquences allant de 400 à 6 300 Hz.

Les mousses selon la présente invention présentent aussi un indice d'affaiblissement de transmission $R_w$ élevé ainsi qu'un indice de niveau du bruit de choc $L_n$ faible. Les mousses présentent aussi un coefficient λ d'isolation thermique approprié pour une utilisation comme isolant thermique.

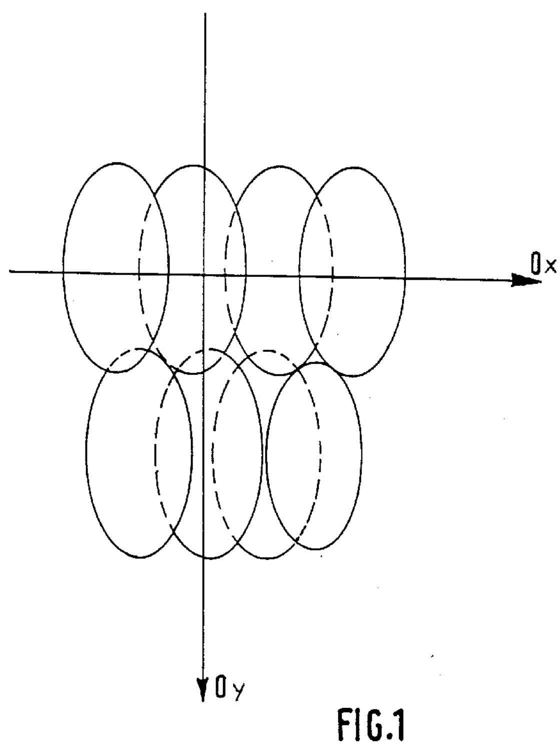


FIG.1

EP 0 607 725 A1

La présente invention a pour objet des mousses polyuréthanes ayant des propriétés acoustiques améliorées, ainsi que leur utilisation en tant qu'isolant thermique et phonique.

On connaît divers types de mousses polyuréthanes, classées en deux grandes catégories, les mousses souples et les mousses rigides. Les mousses souples sont formées à partir de polyols ayant une chaîne linéaire importante, obtenus par action d'oxyde d'éthylène. Les mousses rigides sont formées à partir de polyols ayant une chaîne plus courte et plus ramifiée, obtenus par action d'oxyde de propylène. Les mousses polyuréthanes souples sont couramment utilisées pour la fabrication de matelas.

Les mousses polyuréthanes rigides sont des isolants thermiques couramment utilisés. Cependant, les propriétés d'isolation phonique ou sonique sont inexistants. Les matières fibrées présentent ces propriétés d'isolation phonique -c'est-à-dire des propriétés acoustiques- mais présentent les défauts inhérents aux matières fibrées.

On connaît des mousses à base de carbodiimide auxquelles on fait subir une compression mécanique afin de leur conférer une certaine élasticité. Ces mousses montrent alors de faibles propriétés d'isolation et d'absorption acoustique.

Les propriétés acoustiques sont constituées par trois caractéristiques principales: l'absorption acoustique, l'affaiblissement en transmission et les faibles bruits d'impact. L'absorption acoustique est mesurée à l'aide du tube de Kundt ou mesurée lors d'essais en salle réverbérante, et correspond au pouvoir d'absorption des sons. Cette propriété est recherchée pour des matériaux entrant dans la constitution des plafonds. L'affaiblissement en transmission, ou isolation acoustique, est aussi appelé "effet masse-ressort": cette caractéristique apparaît lors du couplage du matériau acoustique avec un corps ayant une masse volumique importante, tel que parpaings, tôle, plâtre, etc. Cette propriété est quantifiée comme l'indice d'affaiblissement acoustique en transmission et est notée $R_w$. Cette propriété est recherchée pour des matériaux entrant dans la constitution de doublage de murs. Les bruits d'impact sont mesurés pour des éléments de construction de plancher, constitués du plancher porteur, d'un matériau acoustique et isolant thermique et du revêtement de sol, tel que carrelage et autre. La détermination s'effectue en mesurant le bruit qui traverse cet élément de construction après un impact sur le revêtement. Cette propriété est recherchée pour des matériaux entrant dans la constitution des planchers.

Outre ces propriétés acoustiques, il est recherché des matériaux qui présentent des propriétés mécaniques. Ces propriétés mécaniques sont la résistance à l'écrasement et l'absence de fluage sous charge, une hydrophobie, une résistance mécanique aux chocs, telle que mesurée par le test dit "test de la belle-mère". Ce test est mis en oeuvre en accrochant un sac de sable de 50 kg pour former un pendule, et projection de ce sac sur un mur comportant un matériau à tester. La résistance est estimée visuellement.

Les mousses actuelles ne présentent pas les propriétés acoustiques mentionnées ci-dessus; au plus, on peut obtenir un léger effet "masse-ressort" en écrasant la mousse pour obtenir une certaine élasticité. Cependant, aucune mousse actuelle ne montre d'absorption acoustique en même temps qu'un effet "masse-ressort" et un faible bruit d'impact, et présentant des caractéristiques d'isolation thermique et des caractéristiques mécaniques élevées.

Il existe donc un besoin d'une mousse alvéolaire rigide présentant des propriétés acoustiques en plus des propriétés d'isolation thermique traditionnelle.

La présente invention répond à ce besoin et fournit une mousse polyuréthane, rigide, à cellules ouvertes, obtenue à partir de diisocyanate(s), de polyol(s) et d'un agent gonflant, caractérisée en ce que ladite mousse présente une absorption acoustique moyenne supérieure à 0,3 sur l'intervalle de fréquences allant de 400 à 6 300 Hz.

Avantageusement, l'absorption acoustique minimale sur l'intervalle allant de 400 à 6 300 Hz est supérieure à 0,3. Ceci montre que la mousse selon la présente invention est efficace sur un large intervalle de fréquences, 400 à 6 300 Hz correspondant au domaine de l'audible.

De préférence, l'absorption acoustique moyenne sur l'intervalle allant de 400 à 6 300 Hz est supérieure à 0,45.

Les mousses présentent de préférence un indice d'affaiblissement acoustique en transmission $R_w$ supérieur à 60 dB, de préférence supérieur ou égal à 65 dB, pour un doublage constitué d'une mousse de 60 mm d'épaisseur accolée à du plâtre de type BA10 posé sur une paroi maçonnée et réalisée en parpaings creux de 200 mm.

Les mousses présentent de préférence une performance acoustique aux bruits d'impact conformément à la norme NFS 31052. Cette performance est quantifiée par le niveau de bruit de chocs $L_n$ conformément à la norme NFS 31052. De préférence, la mousse présente une valeur moyenne de $L_n$, pour une épaisseur de 30 mm, inférieure à 55 dB sur l'intervalle de fréquences de 100 à 5 000 Hz. Plus avantageusement encore, la mousse présente une valeur moyenne du niveau de bruit de chocs $L_n$ inférieure à 45 dB, de préférence inférieure à 40 dB.

Selon une variante, le coefficient λ d'isolation thermique est inférieur à 40. De préférence, le coefficient λ d'isolation thermique est inférieur ou égal à environ 35.

Selon une variante, la mousse polyuréthane possède un réseau de cellules dont au moins une dimension de cellule est comprise entre 50 et 300 μm. Au moins une dimension étant comprise entre 50 et 300 μm, les cellules sont de dimension réduite. Le terme "au moins une dimension", tel qu'utilisé dans la présente description, signifie une des trois dimensions du parallélépipède dans lequel on peut inscrire la cellule. En fait, lorsqu'on effectue une coupe, cette dimension est la largeur ou longueur de la cellule.

Le terme "cellules ouvertes" correspond au terme couramment utilisé par l'homme de l'art. Selon ce terme, au moins 95, de préférence au moins 98% des cellules sont ouvertes.

Le terme "mousse rigide" tel qu'utilisé dans la présente invention correspond à l'acceptation classique par l'homme de l'art, la classification habituelle comportant les mousses rigides/semi-rigides/souples (ou flexibles). Avantageusement, des canaux sont organisés entre les cellules, mettant en connexion un minimum de cellules.

Selon un mode de réalisation, les cellules ont une forme ellipsoïde, la dimension des cellules selon le grand axe étant égale à 1,5 à 5 fois la dimension selon le petit axe.

De préférence, la distribution des cellules présente un indice de polydispersité faible. Par "indice de polydispersité", on entend une largeur à mi-hauteur du pic de la courbe gaussienne qui est faible; la courbe est en fait "pointue".

En effet, les cellules ouvertes des mousses classiques sont de dimension relativement importante; de plus, elles ne présentent ni la forme, ni la distribution que présentent les mousses selon la présente invention. Les canaux particuliers mettent les cellules en connexion les unes avec les autres, mais selon un nombre minimum. Les présentes mousses possèdent de façon surprenante des propriétés acoustiques, en sus des propriétés thermiques classiques.

Le diisocyanate et le polyol et/ou le diol éventuellement utilisé, sont utilisés selon des rapports molaires sensiblement stoechiométriques. Dans le calcul de ce rapport, on tiendra compte du fait qu'une partie du diisocyanate est susceptible de réagir avec d'autres réactifs pour la génération in situ de l'agent gonflant. C'est par exemple le cas avec l'eau; dans ce cas, le rapport stoechiométrique correspond au diisocyanate restant après réaction avec l'eau. Selon une variante, la densité de la mousse est comprise entre 14 et 22 $kg.m^{-3}$, de préférence 16 à 20 $kg.m^{-3}$.

Selon un premier mode de réalisation, le(s) polyol(s) est composé d'au moins 50% en masse d'un diol (ou plusieurs diols).

Le complément du diol utilisé dans les mousses selon ce mode de réalisation est fourni par des diols ou polyols appropriés, tels que les polyols classiquement utilisés.

De façon avantageuse, le diol représente au moins 80% en masse.

Selon une variante avantageuse, le diol est un diol halogéné. Selon cette variante, on peut obtenir une mousse résistant au feu. En partant de diol halogéné pur ou en quantité substantielle, il est possible d'obtenir une mousse présentant au test selon la norme française de réaction au feu le classement M1. Les propriétés ignifuges sont appréciés par ce classement, un indice faible signifiant une excellente tenue. Un diol bromé est disponible sur le marché sous le nom de IXOL B 251 (Solvay); un diol chloré est disponible sous le nom FYROL 6 (Akzo). Les diols polyesters ainsi que des diols oxypropylés ou oxyéthylés sont aussi appropriés.

Selon une variante, on ajoute de l'eau afin que celle-ci réagisse avec le diisocyanate et conduise à la formation in situ de l'agent gonflant (dans ce cas du $CO_2$). Selon cette variante, l'eau ajoutée pour réagir avec le diisocyanate et former un gaz est présente en une quantité comprise entre 1 et 5% en poids, sur la base du poids total des réactifs (diol, isocyanate, eau).

Selon une autre variante, le diisocyanate est du méthyldiisocyanate ou MDI. Ce MDI est le diisocyanate couramment utilisé; il correspond à un oligomère de:

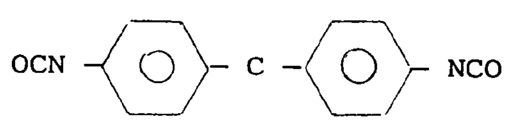

Selon une autre variante, on ajoute de l'air lors de la formation du mélange des composants. Cet ajout d'air peut être effectué selon plusieurs façons. On peut injecter l'air sous pression, par exemple 5 bar, dans la tête de mélange des produits, ou dissoudre l'air dans un des réactifs, par exemple la base diol. L'air est présent en une quantité classique pour l'homme de l'art, comprise entre 0,05 et 1% en volume, avantageusement environ 0,1% en volume.

Selon une variante, le diol a un poids moléculaire Mw supérieur à 2 000. Par le terme "diol" tel qu'utilisé

selon cette variante, on entend le diol et le ou les polyols utilisés en complément. Le poids moléculaire Mw est le poids moléculaire moyen de tous les diols ou polyols utilisés.

Selon un second mode de réalisation, un agent ouvreur de cellules est présent. Cet agent ouvreur est présent en une quantité de 0,2 à 2,5% en poids par rapport au polyol, de préférence de 0,5 à 2%. Avantageusement, l'agent ouvreur de cellules est un polyétherpolyol à base de propylèneoxyde/éthylèneoxyde. Des résultats particulièrement bons ont été obtenus lorsque l'agent ouvreur est le Caradol MD 36-02 de chez Shell. Cet agent ouvreur présente les caractéristiques suivantes:

| Propriété | Méthode de test | Valeur | Unité |
|---|---|---|---|
| Couleur Haze | ASTM D 1209 | 30 | |
| Valeur hydroxyl | ASTM D 4274 C | 36 | mg KOH/g |
| Densité à 20°C | ASTM D 4052 | 1,09 | kg/l |
| Teneur en eau | ASTM D 4672 | <0,15 | % en poids |
| Acidité totale | ASTM D 4662 | <0,01 | mg KOH/g |
| Viscosité à 25°C | ASTM D 445 | 900 | mPa.s |
| Point flash | ASTM D 93 | >200 | °C |

Selon ce mode de réalisation, l'agent gonflant est avantageusement de l'eau, de préférence présente en une quantité de 1 à 5% en poids.

Selon ce mode de réalisation, il est aussi possible d'injecter de l'air lors de la formation de la mousse. Avantageusement, le diisocyanate est du MDI.

Les mousses possèdent aussi des propriétés mécaniques spécifiques. Ainsi, selon un mode de réalisation, la résistance à la compression est comprise entre 0,3 et 0,7 daN/$cm^2$.

De plus, les présentes mousses possèdent par ailleurs des propriétés ignifuges. Ces propriétés ignifuges peuvent aussi être conférées et/ou améliorées par l'adjonction d'agents ignifugeants, tels que TCPP (trichlorpropylphosphate).

D'autres buts, avantages et caractéristiques apparaîtront à la lecture de la description de divers modes de réalisation de l'invention, faite à titre non limitatif et en regard du dessin annexé, dans lequel:

- la figure 1 représente les plans de coupe;
- les figures 2a et 2b sont deux coupes d'une mousse selon l'invention;
- les figures 3a et 3b sont deux coupes d'une autre mousse selon l'invention;
- les figures 4a et 4b sont deux coupes d'une mousse selon l'art antérieur;
- les figures 5a et 5b sont deux coupes d'une autre mousse selon l'art antérieur;
- la figure 6 est la courbe d'absorption acoustique pour une mousse selon l'invention;
- la figure 7 est la courbe d'absorption acoustique pour une autre mousse selon l'invention;
- la figure 8 est la courbe d'absorption acoustique pour une mousse selon l'art antérieur;
- la figure 9 est la courbe d'absorption acoustique pour une autre mousse selon l'art antérieur;
- la figure 10 est la courbe de performance acoustique aux bruits d'impact pour une mousse selon la présente invention.

Les présentes mousses contiennent aussi les additifs et adjuvants classiques, tels que le nonylphénol éthoxylé.

Ainsi, un catalyseur est classiquement ajouté. A titre d'exemple, on peut citer: diméthylcyclohexylamine (DMCHA), octoate de potassium, catalyseur à base d'étain tel que K15 de chez Air Product, et autres.

De plus, un tensio-actif est aussi classiquement ajouté. A titre d'exemple, on peut citer: silicone, tel que SR 242 (Union Carbide) ou B-1048 (Goldschmidt).

Les mousses de la présente invention selon le premier mode de réalisation sont préparées par un procédé classique dit "procédé à deux composants". Un premier composant consiste en un mélange: diol (éventuellement polyols), eau, catalyseur, tensio-actif, adjuvant et autre; un second composant est l'isocyanate. Le mélange est effectué à une température comprise entre 10 et 50°C, de préférence à température ambiante. Le mélange de ces deux composants est effectué dans une tête de coulée, juste avant le dépôt du mélange sur par exemple une feuille de parement. Celle-ci se déroule à une vitesse appropriée, comprise entre 2 et 30 m.$mn^{-1}$, selon le type de fabrication recherchée (plaques ou blocs à refendre). Le mélange commence à réagir; le temps de démarrage de la réaction -aussi appelé temps de crème- est d'environ 15 secondes. La fin de la

réaction se règle entre 1 et 3 minutes selon la machine utilisée. La mousse finale est ensuite découpée en panneaux de dimensions appropriées.

Les mousses de l'invention selon le second mode de réalisation sont préparées par un procédé similaire ou identique à celui décrit pour le premier mode de réalisation, dans des conditions opératoires similaires ou identiques.

Les propriétés d'isolation thermique sont déterminées par la mesure du coefficient $\lambda$ d'isolation thermique par la méthode du fluxmètre entre 0,035 et 0,042 W/m.C, ladite mesure étant effectuée à 20°C.

Les propriétés d'isolation acoustique sont déterminées par la mesure de l'absorption pour des fréquences comprises entre 400 et 6 200 Hz. L'absorption est comprise entre 0 et 1.

Les propriétés mécaniques sont déterminées par la mesure de la résistance à la compression à 10%, mesurée selon la norme NFT 56-101, comprise dans les trois sens entre 0,3 et 0,7 daN/cm$^2$.

Les mousses selon la présente invention peuvent être utilisées en tant qu'isolants thermiques et acoustiques dans le domaine des bâtiments et travaux publics. Ces mousses peuvent être incorporées dans des plafonds, dans des murs sous forme de doublage et dans des planchers sous forme de sandwich constitués du plancher porteur, de la mousse et du revêtement.

La présente invention a donc aussi pour objet les doublages obtenus à l'aide des présentes mousses. Ce terme "doublage" couvre, dans la présente invention, tant les doublages pour murs, que pour planchers et plafonds. Ces doublages sont constitués d'une épaisseur de mousse accolée à un matériau porteur, de préférence de masse volumique importante. Ce matériau porteur de masse volumique importante peut être du plâtre, du béton, des parpaings, une couche d'enduit, une tôle, un parement, etc. Dans le cas du parement, les mousses peuvent alors être utilisées telles quelles comme éléments de construction, le parement étant destiné à assurer le maintien mécanique nécessaire et permettant une décoration, si on le souhaite.

La mousse selon la présente invention peut se présenter sous toutes les formes usuelles dans l'art, et notamment plaques, blocs, et bombes aérosols.

Les exemples suivants servent à illustrer l'invention.

<u>EXEMPLE 1</u> (selon l'invention, premier mode de réalisation)

On injecte deux prémélanges A et B, selon des débits respectifs de 10,5 et 11,4 kg/min, dans une tête de coulée, à une température de 25°C. La vitesse de défilement de la machine est de 18 m/min.

Le prémélange A est constitué, en poids, de:

- 100 parts de diol bromé B 251 (Solvay)
- 1 part de silicone SR 242 (Union Carbide)
- 1,5 parts de diméthylcyclohexylamine (DMCHA)
- 0,2 part d'octoate de potassium
- 8 parts d'eau

Le prémélange B est constitué, en poids, de:

- 120 parts de VM 85 (isocyanate) (ICI).

On obtient une mousse, désignée A1. Elle présente les propriétés rassemblées dans le tableau I ci-après.

On effectue deux coupes dans cette mousse selon deux plans perpendiculaires entre eux, (Ox) et (Oy). Ces coupes sont données dans les figures 2a et 2b respectivement, qui sont des photographies, sur lesquelles est reportée l'échelle. La figure 6 est la courbe donnant l'absorption acoustique en fonction de la fréquence. On remarque que l'absorption moyenne est supérieure à 0,5.

<u>EXEMPLE 2</u> (selon l'invention, premier mode de réalisation)

On opère dans le même appareil et dans les mêmes conditions opératoires que dans l'exemple 1.

Les deux prémélanges A et B sont respectivement

<u>prémélange A</u>

- 50 parts d'Ixol B-251 (Solvay)
- 50 parts de APP 315 (Union Carbide)
- 1 part de SR 242
- 1,5 parts de DMCHA
- 0,5 part d'octoate de potassium
- 1 part de nonylphénol éthoxylé
- 8 parts d'eau

prémélange B

110 parts de VM 85

On obtient une mousse, désignée A'1. Elle présente les propriétés rassemblées dans le tableau I ci-après, sensiblement équivalentes à celles de A1.

EXEMPLE 3 (selon l'invention, premier mode de réalisation)

On opère dans le même appareil et dans les mêmes conditions opératoires que dans l'exemple 1, à l'exception du fait que cette fois-ci on injecte 0,1 % en volume d'air, sous une pression de 5 bar au niveau de la tête de coulée.

Les deux prémélanges A et B sont respectivement

prémélange A

40 parts d'Ixol B-251 (Solvay)
5 parts de 36-3 (Shell)
55 parts de Vonacor (RA 500 de Dow)
1,5 parts de B 1048 (silicone)
1,8 parts de DMCHA
0,5 part d'octoate de potassium
8 parts d'eau

prémélange B

125 parts de MDI

On obtient une mousse, désignée A2. Elle présente les propriétés rassemblées dans le tableau I ci-après.

On effectue deux coupes dans cette mousse selon deux plans perpendiculaires entre eux, (Ox) et (Oy). Ces coupes sont données dans les figures 3a et 3b respectivement, qui sont des photographies, sur lesquelles est reportée l'échelle. La figure 7 est la courbe donnant l'absorption acoustique en fonction de la fréquence. On remarque que l'absorption moyenne est supérieure à 0,7.

EXEMPLE 4 (comparatif)

On opère dans le même appareil et dans les mêmes conditions opératoires que dans l'exemple 1.

Les deux prémélanges A et B sont respectivement

prémélange A

45 parts d'Ixol B-251 (Solvay)
40 parts de APP 240 (Union Carbide)
8 parts de glycérine
2 parts de NP 9
2 parts de B 1048
2 parts de nonylphénol éthoxylé
9 parts d'eau

prémélange B

120 parts de VM 85

On obtient une mousse, désignée B1. Elle présente les propriétés rassemblées dans le tableau I ci-après.

On effectue deux coupes dans cette mousse selon deux plans perpendiculaires entre eux, (Ox) et (Oy). Ces coupes sont données dans les figures 4a et 4b respectivement, qui sont des photographies, sur lesquelles est reportée l'échelle. La figure 8 est la courbe donnant l'absorption acoustique en fonction de la fréquence. On remarque immédiatement que cette mousse ne présente qu'une absorption moyenne faible de l'ordre de 0,1 et qu'elle n'est efficace que pour un intervalle de fréquences très étroit.

EXEMPLE 5 (comparatif)

On opère dans le même appareil et dans les mêmes conditions opératoires que dans l'exemple 1. Les deux prémélanges A et B sont respectivement

prémélange A

5 parts de 36-3 (Shell)
70 parts de Voracor (RA 500 de Dow)
25 parts d'APP 315 (Union Carbide)
2 parts de SR 242
1,8 parts de DMCHA
0,8 part d'octoate de potassium
9 parts d'eau

prémélange B

140 parts de VM 85

On obtient une mousse, désignée B2. Elle présente les propriétés rassemblées dans le tableau I ci-après.

On effectue deux coupes dans cette mousse selon deux plans perpendiculaires entre eux, (Ox) et (Oy). Ces coupes sont données dans les figures 5a et 5b respectivement, qui sont des photographies, sur lesquelles est reportée l'échelle. La figure 9 est la courbe donnant l'absorption acoustique en fonction de la fréquence. On remarque immédiatement que cette mousse ne présente qu'une absorption moyenne faible de l'ordre de 0,1 et qu'elle n'est efficace que pour un intervalle de fréquences très étroit.

TABLEAU I

| Propriétés | | | | | |
|---|---|---|---|---|---|
| Mousse | Densité | $\lambda$ à 20°C | résistance à la compression en daN/cm$^2$ | Classement au feu | Absorption acoustique |
| A1 | 20,0 | 35,0 | 0,3 - 0,7 | M1 | 0,6 - 0,7 |
| A'1 | | | | M3 | |
| A2 | 18,7 | 35,0 | 0,3 - 0,7 | M3 | 0,65 - 0,80 |
| B1 | 18,0 | 35,0 | 0,3 - 0,7 | M3 | 0,30 - 0,35 |
| B2 | 19,2 | 35,5 | 0,3 - 0,7 | M4 | 0,25 - 0,40 |

EXEMPLE 6

Cet exemple est relatif à la mesure du niveau de bruit de chocs normalisé $L_n$. La mousse étudiée est la mousse A2 de l'exemple 3. La méthode de mesure suit les normes suivantes, elles-mêmes en concordance technique avec la norme internationale ISO 140:

- NF S 31-049: spécifications relatives à la fidélité
- NF S 31-050: spécifications relatives aux postes d'essais
- NF S 31-052: mesure en laboratoire de la transmission du bruit de choc par les planchers.

On définit le niveau du bruit de chocs, $L_l$, par le niveau de la pression acoustique moyenne, pour une bande de fréquences donnée, dans la salle de réception lorsque le plancher en essai est excité par la machine à chocs normalisée.

On détermine le niveau du bruit de choc normalisé $L_n$ comme suit. Le plancher à mesurer est installé entre deux salles réverbérantes. La machine à chocs normalisée fonctionnant, on mesure le niveau de la pression acoustique moyenne dans la salle située sous le plancher. On y suppose le champ sonore diffus.

L'indice $L_n$ est obtenu par:

$$L_n = L_i - 10 \lg \frac{Ao}{A}$$

Ao : aire d'absorption de référence égale à 10 $m^2$;
A : aire d'absorption équivalente.

On le détermine par tiers d'octave et on le calcule globalement en dB (A).

On détermine la production du bruit de chox comme suit. Le bruit de choc est produit par une machine conforme à la description qu'en donne la norme NF S 31-052. Elle est placée successivement en quatre positions en évitant de la faire frapper près des bords.

On détermine la pression acoustique moyenne comme suit. Pour chacune des 18 bandes d'un tiers d'octave, le niveau de la pression acoustique moyenne est obtenu à partir des niveaux mesurés en six emplacements.

On détermine l'aire d'absorption équivalente comme suit. L'aire d'absorption équivalente de la salle de réception est obtenue à partir de mesures de la durée de réverbération par la formule:

$$A = 0,16\ V/T$$

V : volume de la salle
T : durée moyenne de réverbération.

La durée de réverbération, pour chacune des 18 bandes d'un tiers d'actove, est déterminée à partir de six mesures (deux relevés pour trois positions de microphone).

L'appareillage est constitué par:

- générateur de bruit BK 1402
- jeu de filtres 1/3 d'octave BK 1612
- amplificateur de puissance C.S.T.B.
- haut-parleurs Cabasse 21 B 25
- machine à chocs BK 3204
- microphones BK 4144 (6)
- préamplificateurs BK 2619 (6)
- alimentation BK 2807 (3)
- calibrateur BK 4230
- sélecteur de canaux BK 5619
- filtre passe-bande BK 5809
- analyseur en temps réel BK 3347
- perforatrice BK 6301
- spectromètre BK 2112
- enregistreur de niveau BK 2305.

On détermine l'expression des résultats comme suit. Les calculs sont faits sur ordinateur. Les résultats sont donnés, arrondis au dB le plus proche, en fonction de la fréquence médiane. Les résultats sont donnés dans la courbe de la figure 10. D'après cette courbe, on remarque que les planchers contenant une mousse selon la présente invention présentent un niveau de bruit de choc nettement inférieur à un plancher sans mousse. Des mousses de différentes épaisseurs sont étudiées, qui toutes présentent la propriété requise.

EXEMPLE 7

Cet exemple présente les résultats des mesures de l'indice d'affaiblissement acoustique $R_w$. La mousse étudiée est la mousse A2 de l'exemple 3.

Les mesures sont réalisées selon les normes NF S 31-049, NF S 31-050 et NF S 31-051, complétées par la norme ISO 717/1 pour l'expression de la valeur unique $R_w$.

On teste trois types de parois simples, respectivement parois simples A, B et C.

La paroi simple A comprend:

- cloison maçonnée réalisée en carreau de plâtre de dimensions 660 x 500 x 70 mm, montés de manière alternée à joints décalés,
- sur une des faces, est appliqué un enduit pelliculaire.

La paroi simple B comprend:

- paroi maçonnée réalisée en parpaings creux, de dimensions 500 x 200 x 200 mm à deux rangées d'alvéoles. Ils sont montés de manière alternée, à joints décalés, au mortier de ciment,
- sur une des faces, est appliqué un enduit ciment de 15 mm d'épaisseur.

La paroi simple C comprend:

- paroi maçonnée réalisée en parpaings pleins de dimensions 395 x 195 x 190 mm, montés de manière alternée, à joints décalés, au mortier de ciment,

- sur une des faces, est appliqué un enduit ciment pelliculaire.

On teste la mousse selon trois types de doublage, les doublages A, B et C.

La paroi doublée A comprend:

- une cloison maçonnée en carreau de plâtre de dimensions 660 x 500 x 70 mm, montés de manière alternée à joints décalés,
- sur une des faces, est appliqué un enduit pelliculaire,
- sur l'autre face, mise en oeuvre d'un complexe de doublage constitué par:
  . une mousse de polyuréthane à cellules ouvertes de 60 mm d'épaisseur et de masse volumique 18 kg/m3,
  . un parement en plaque de plâtre BA 10.

  La mise en oeuvre du doublage est effectuée par collage avec des plots de mortier adhésif à raison de 7 au $m^2$ ($\phi$ 12 cm).
- le jointoiement des panneaux entre eux et la cueillie est effectué avec le système bande à joints et enduit; en partie basse, l'étanchéité est assurée par un joint mastic acrylique.

La paroi doublée B comprend:

- un mur support en parpaings creux de 200 mm d'épaisseur,
- sur une face, est appliqué un enduit ciment de 15 mm d'épaisseur,
- sur l'autre face, mise en oeuvre d'un complexe de doublage constitué par:
  . une mousse de polyuréthane à cellules ouvertes de 60 mm d'épaisseur et de masse volumique 18 kg/m3,
  . un parement en plaque de plâtre BA 10.

  Le complexe est assemblé par collage à la colle néoprène.

  La mise en oeuvre du doublage est effectuée par collage avec des plots de mortier adhésif à raison de 7 au $m^2$ ($\phi$ 12 cm).
- le jointoiement des panneaux entre eux et la cueillie est effectué avec le système bande à joints et enduit; en partie basse, l'étanchéité est assurée par un joint mastic acrylique.

La paroi doublée C comprend:

. mur en parpaings pleins de dimensions 395 x 195 x 190 mm, montés de manière alternée à joints décalés au mortier de ciment,

- sur une des faces, est appliqué un enduit ciment pelliculaire,
- sur l'autre face, mise en oeuvre d'un complexe de doublage constitué par:
  . une mousse de polyuréthane à cellules ouvertes de 60 mm d'épaisseur et de masse volumique 18 kg/m3,
  . un parement en plaque de plâtre BA 10.

  Le complexe est assemblé par collage avec de la colle néoprène.

  La mise en oeuvre du doublage est effectuée par collage avec des plots de mortier adhésif à raison de 7 au $m^2$ ($\phi$ 12 cm).
- le jointoiement des panneaux entre eux et la cueillie est effectué avec le système bande à joints et enduit; en partie basse, l'étanchéité est assurée par un joint mastic acrylique.

Le matériel et la salle réverbérante utilisés sont ceux du Centre Scientifique et Technique du Bâtiment, Division Essais Acoustiques à Marne la Vallée.

Les résultats sont consignés dans le tableau suivant.

TABLEAU II

| Essai | $R_{rose}$ (dB) | | $R_{route}$ (dB) | | $R_w$ (dB) | |
|---|---|---|---|---|---|---|
| | Paroi simple | Paroi doublée | Paroi simple | Paroi double | Paroi simple | Paroi doublée |
| A | 35 | 52 | 32 | 47 | 34 | 52 |
| B | 53 | 64 | 50 | 58 | 54 | 65 |
| C | 61 | 67 | 56 | 61 | 61 | 68 |

EXEMPLE 8 (selon l'invention, second mode de réalisation)

On opère dans le même appareil et dans les mêmes conditions opératoires que dans l'exemple 1. Les deux prémélanges A et B sont respectivement:

prémélange A

| | |
|---|---|
| CL 104 (Dow Chemical) | 98 |
| Cavadol 36-02 (Shell) | 2 |
| Silicone (Union Carbide) | 1,5 |
| DMCHA (Air Product) | 0,5 |
| Eau | 8 |

prémélange B

| | |
|---|---|
| Diisocyanate (VM 85) | 135 |

EXEMPLE 9 (selon l'invention, second mode de réalisation)

On opére dans le même appareil et dans les mêmes conditions opératoires que dans l'exemple 1. Les deux prémélanges A et B sont respectivement:

prémélange A

| | |
|---|---|
| Arcol 3755 (Arco) | 55 |
| Ixol B-251 (Solvay) | 30 |
| Fyrol 6 (Akzo) | 15 |
| Caradol 36-02 (Shell) | 1,5 |
| Silicone | 1,5 |
| DMCHA | 1,5 |
| K 15 | 0,5 |
| Eau | 8,5 |

prémélange B

| | |
|---|---|
| Isocyanate (VM 85) | 125 |

La mousse ainsi obtenue présente le classement M1 au test de réaction au feu.

EXEMPLE 10

On prépare un bloc de mousse dans les condotions et appareillage de l'exemple 1. Les deux prémélanges A et B sont respectivement:

prémélange A

| | |
|---|---|
| Arcol 3541 (Arco) | 90 |
| TCPP | 10 |
| Caradol 36-02 (Shell) | 1 |
| Silicone | 1,5 |
| DMCHA | 1,5 |
| K 15 | 0,5 |
| Eau | 9 |

prémélange B

| | |
|---|---|
| Isocyanate (VM 85) | 135 |

EXEMPLE 11

Dans cet exemple, on mesure l'indice d'affaiblissement acoustique en transmission $R_w$ de la mousse obtenue à l'exemple 8.

Le mode opératoire utilisé est identique à celui utilisé dans l'exemple 7, essai B, à l'exception du fait que l'épaisseur de la mousse utilisée est de 3 cm.

Les résultats sont portés dans le tableau ci-après.

TABLEAU III

| $R_{rose}$ (dB) | | $R_{route}$ (dB) | | $R_w$ (dB) | |
|---|---|---|---|---|---|
| Paroi simple | Paroi doublée | Paroi simple | Paroi doublée | Paroi simple | Paroi doublée |
| 53 | 61 | 50 | 57 | 54 | 62 |

**Revendications**

**1.-** Mousse polyuréthane, rigide, à cellules ouvertes, obtenue à partir de diisocyanate(s), de polyol(s) et d'un agent gonflant, caractérisée en ce que ladite mousse présente une absorption acoustique moyenne supérieure à 0,3 sur l'intervalle de fréquences allant de 400 à 6 300 Hz.

**2.-** Mousse polyuréthane selon la revendication 1, caractérisée en ce qu'elle possède un réseau de cellules dont au moins une dimension de cellule est comprise entre 50 et 300 µm.

**3.-** Mousse selon la revendication 1 ou 2, caractérisée en ce que des canaux sont organisés entre les cellules, mettant en connexion un minimum de cellules.

**4.-** Mousse selon l'une quelconque des revendications 1 à 3, caractérisée en ce que les cellules ont une forme ellipsoïde, la dimension des cellules selon le grand axe étant égale à 1,5 à 5 fois la dimension selon le petit axe.

**5.-** Mousse selon l'une quelconque des revendications 1 à 4, caractérisée en ce que la distribution des cellules présente un indice de polydispersité faible.

**6.-** Mousse selon l'une quelconque des revendications 1 à 5, caractérisée en ce que l'absorption acoustique minimale sur l'intervalle allant de 400 à 6 300 Hz est supérieure à 0,3.

**7.-** Mousse selon l'une quelconque des revendications 1 à 6, caractérisée en ce que l'absorption acoustique moyenne sur l'intervalle allant de 400 à 6 300 Hz est supérieure à 0,45.

**8.-** Mousse selon l'une quelconque des revendications 1 à 7, caractérisée en ce qu'elle présente un indice d'affaiblissement acoustique en transmission $R_w$ supérieur à 60 dB, pour un doublage constitué d'une mousse de 60 mm d'épaisseur accolée à du plâtre de type BA10 posé sur une paroi maçonnée réalisée en parpaings creux de 200 mm.

**9.-** Mousse selon la revendication 8, caractérisée en ce qu'elle présente un indice d'affaiblissement acoustique en transmission $R_w$ supérieur ou égal à 65 dB.

**10.-** Mousse selon l'une quelconque des revendications 1 à 9, caractérisée en ce qu'elle présente une valeur moyenne du niveau de bruit de chocs $L_n$ conformément à la norme NFS 31052 pour une épaisseur de 30 mm inférieure à 55 dB sur l'intervalle de fréquences de 100 à 5 000 Hz.

**11.-** Mousse selon la revendication 10, caractérisée en ce qu'elle présente une valeur moyenne du niveau de bruit de chocs $L_n$ inférieure à 45 dB, de préférence inférieure à 40 dB.

**12.-** Mousse selon l'une quelconque des revendications 1 à 11, caractérisée en ce que la résistance à la compression est comprise entre 0,3 et 0,7 daN/cm$^2$.

**13.-** Mousse selon l'une quelconque des revendications 1 à 12, caractérisée en ce que le coefficient $\lambda$ d'isolation thermique est inférieur à 40.

**14.-** Mousse selon la revendication 13, caractérisée en ce que le coefficient $\lambda$ d'isolation thermique est inférieur ou égal à environ 35.

**15.-** Mousse selon l'une quelconque des revendications 1 à 14, caractérisée en ce que la densité est comprise entre 14 et 22 kg.m$^{-3}$, de préférence entre 16 et 20 kg.m$^{-3}$.

**16.-** Mousse selon l'une quelconque des revendications 1 à 15, caractérisée en ce que le(s) polyol(s) est composé d'au moins 50% en masse d'un diol.

**16.-** Mousse selon la revendication 16, caractérisée en ce que ledit diol représente au moins 80% en masse,

**18.-** Mousse selon la revendication 16 ou 17, caractérisée en ce que ledit diol est un diol halogéné.

**19.-** Mousse selon l'une quelconque des revendications 16 à 18, caractérisée en ce que l'agent gonflant est de l'eau.

**20.-** Mousse selon la revendication 19, caractérisée en ce que l'eau est présente à raison de 1 à 5% en poids.

**21.-** Mousse selon l'une quelconque des revendications 16 à 20, caractérisée en ce que le diisocyanate est du MDI.

**22.-** Mousse selon l'une quelconque des revendications 16 à 21, caractérisée en ce qu'on injecte de l'air lors de la formation de la mousse.

**23.-** Mousse selon l'une quelconque des revendications 16 à 22, caractérisée en ce que le diol a un poids moléculaire Mw supérieur à 2 000.

**24.-** Mousse selon l'une quelconque des revendications 1 à 15, caractérisée en ce qu'un agent ouvreur de cellules est présent.

**25.-** Mousse selon la revendication 24, caractérisée en ce que l'agent ouvreur de cellules est présent en une quantité de 0,2 à 2,5% en poids par rapport au polyol, de préférence de 0,5 à 2%.

**26.-** Mousse selon la revendications 24 ou 25, caractérisé en ce que l'agent ouvreur de cellules est un polyétherpolyol à base de propylèneoxyde/éthylèneoxyde.

**27.-** Mousse selon l'une quelconque des revendications 24 à 26, caractérisée en ce que l'agent ouvreur de cellules est le caradol MD 36-02 de chez Shell.

**28.-** Mousse selon l'une quelconque des revendications 24 à 27, caractérisée en ce que l'agent gonflant est de l'eau.

**29.-** Mousse selon la revendication 28, caractérisée en ce que l'eau est présente à raison de 1 à 5% en poids.

**30.-** Mousse selon l'une quelconque des revendications 24 à 29, caractérisée en ce qu'on injecte de l'air lors de la formation de la mousse.

**31.-** Mousse selon l'une quelconque des revendications 24 à 30, caractérisée en ce que le diisocyanate est du MDI.

**32.-** Mousse selon la revendication 1, caractérisée en ce qu'elle présente une coupe selon l'axe (Ox) telle que représentée à la figure 2a.

**33.-** Mousse selon la revendication 1, caractérisée en ce qu'elle présente une coupe selon l'axe (Oy) telle que représentée à la figure 2b.

**34.-** Mousse selon la revendication 1, caractérisée en ce qu'elle présente une coupe selon l'axe (Ox) telle que représentée à la figure 3a.

**35.-** Mousse selon la revendication 1, caractérisée en ce qu'elle présente une coupe selon l'axe (Oy) telle que représentée à la figure 3b.

**36.-** Mousse selon l'une quelconque des revendications 1 à 35, sous forme de plaques, blocs, ou bombes aérosols.

**37.-** Doublage comprenant une mousse selon l'une quelconque des revendications 1 à 35.

**38.-** Utilisation en tant qu'isolant thermique et phonique d'une mousse selon l'une quelconque des revendications 1 à 35.

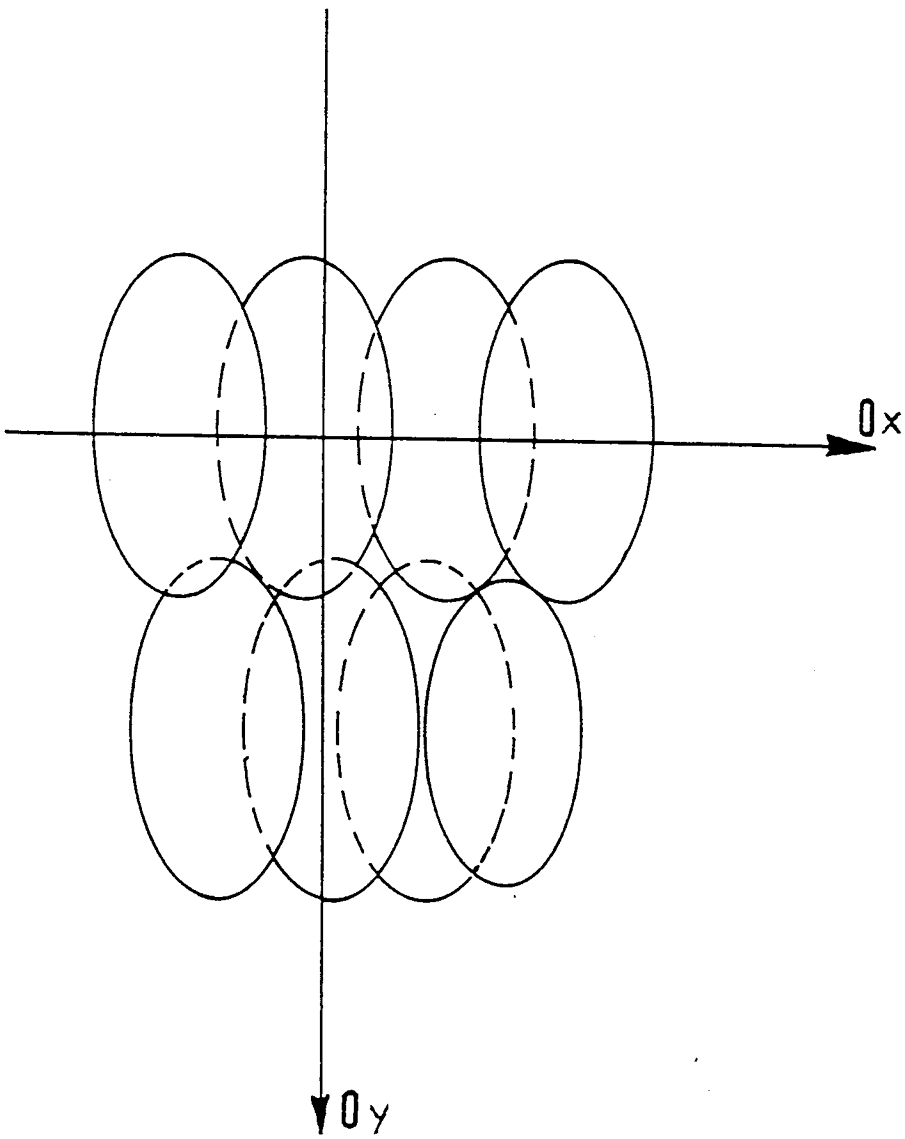


FIG.1

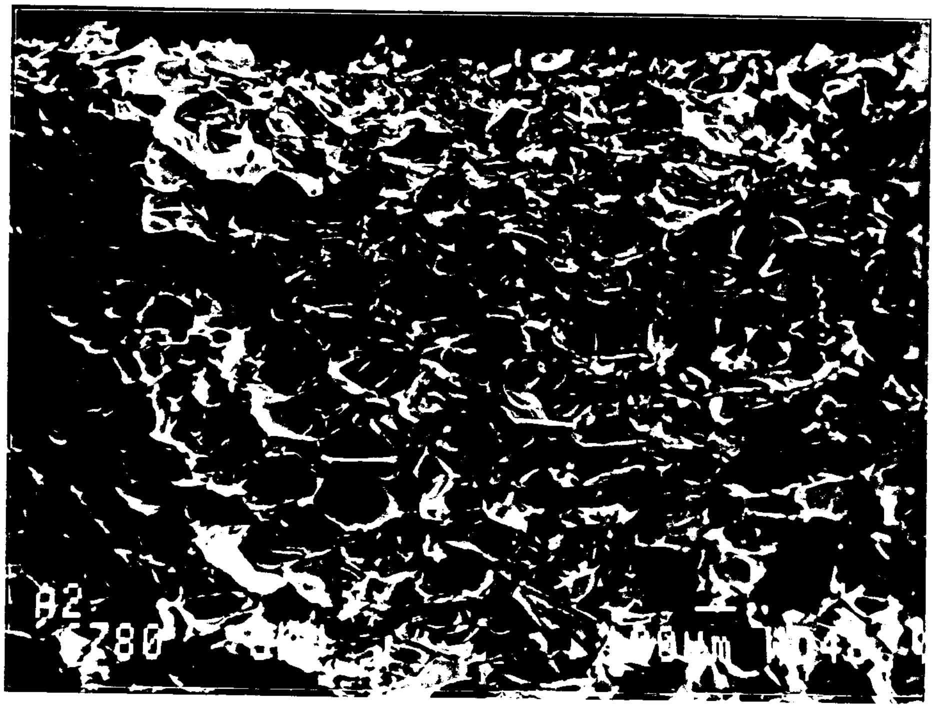

FIG. 2a

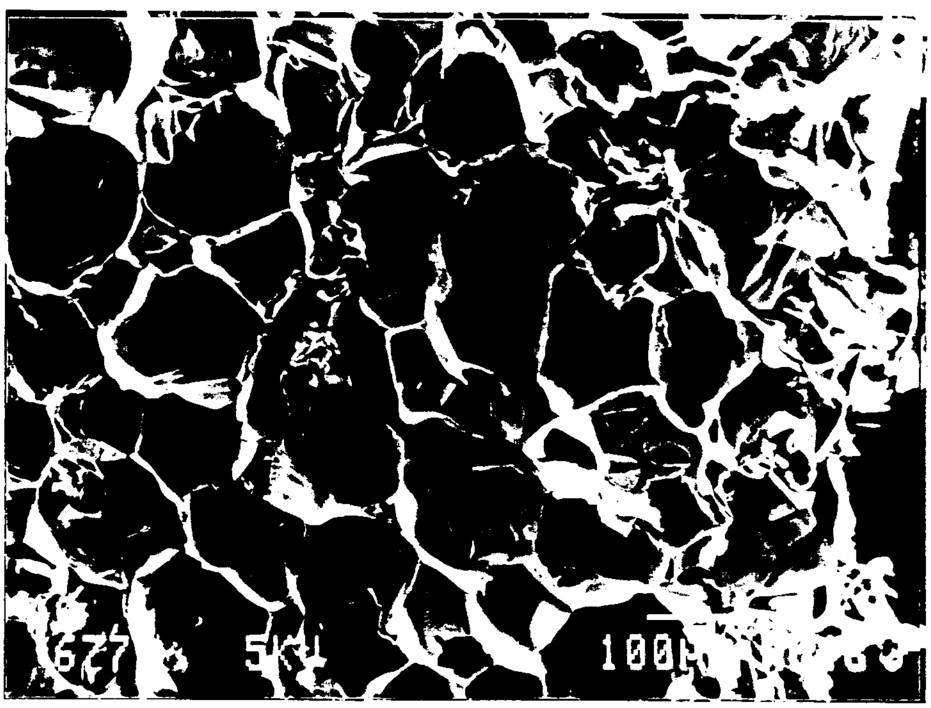

FIG.2b

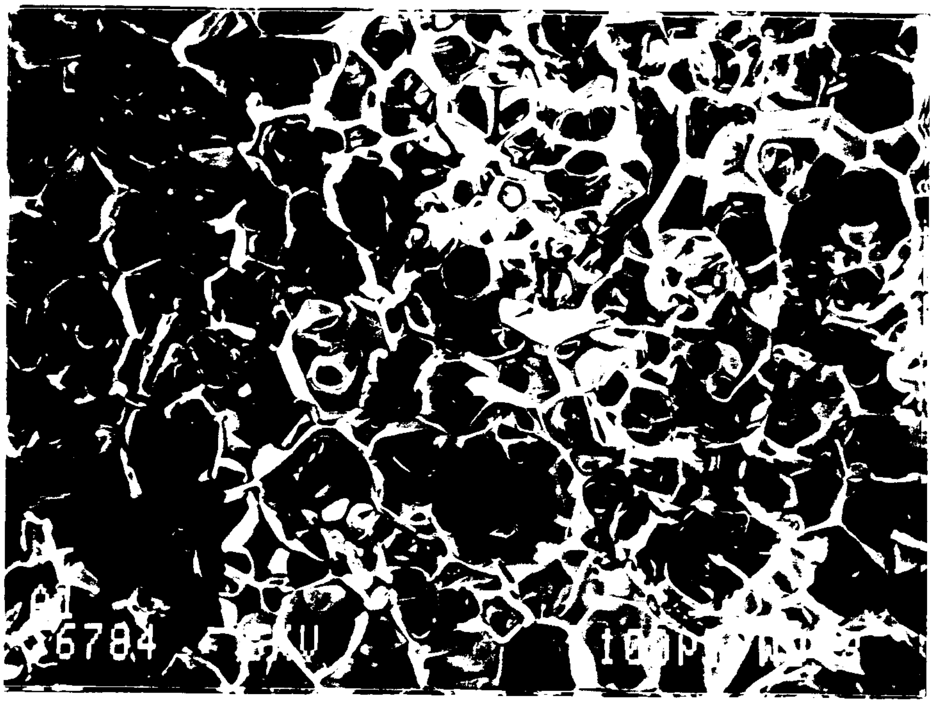

FIG.3a

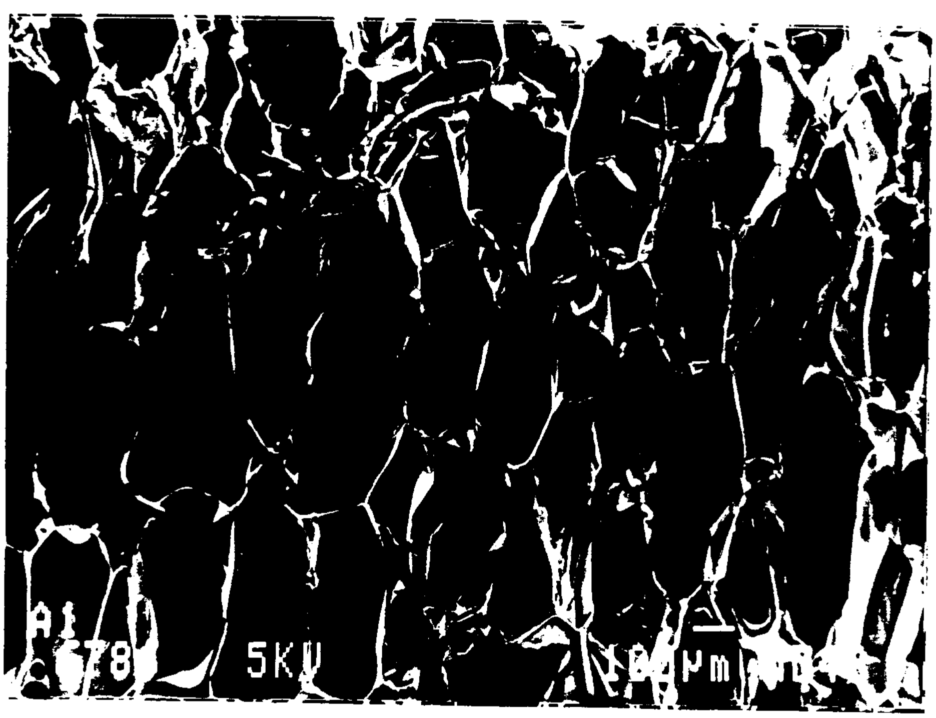


FIG.3b

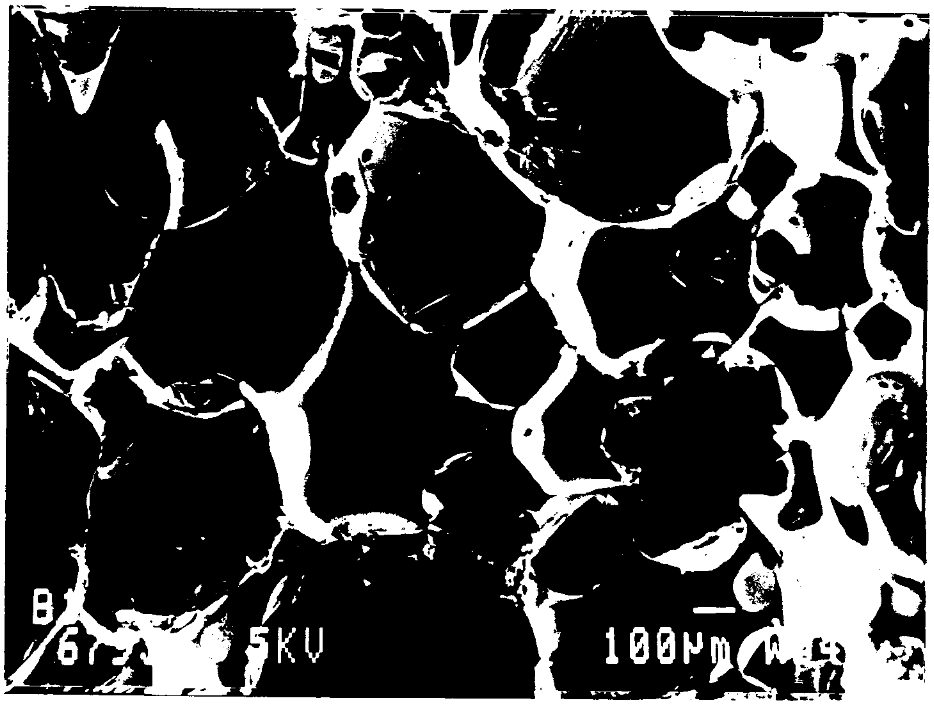


FIG.4a

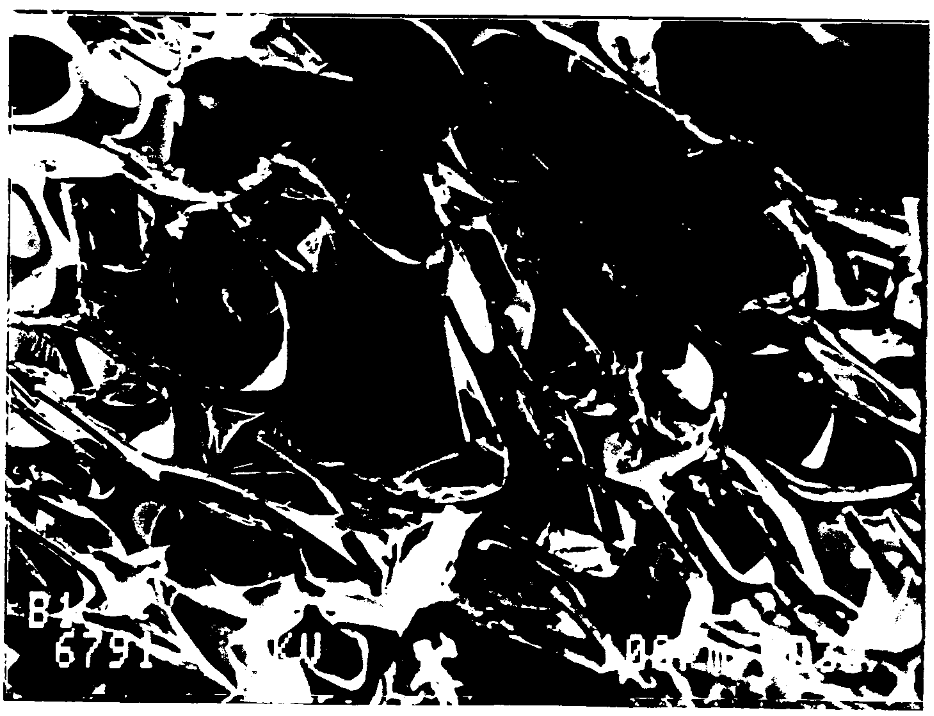


FIG.4b

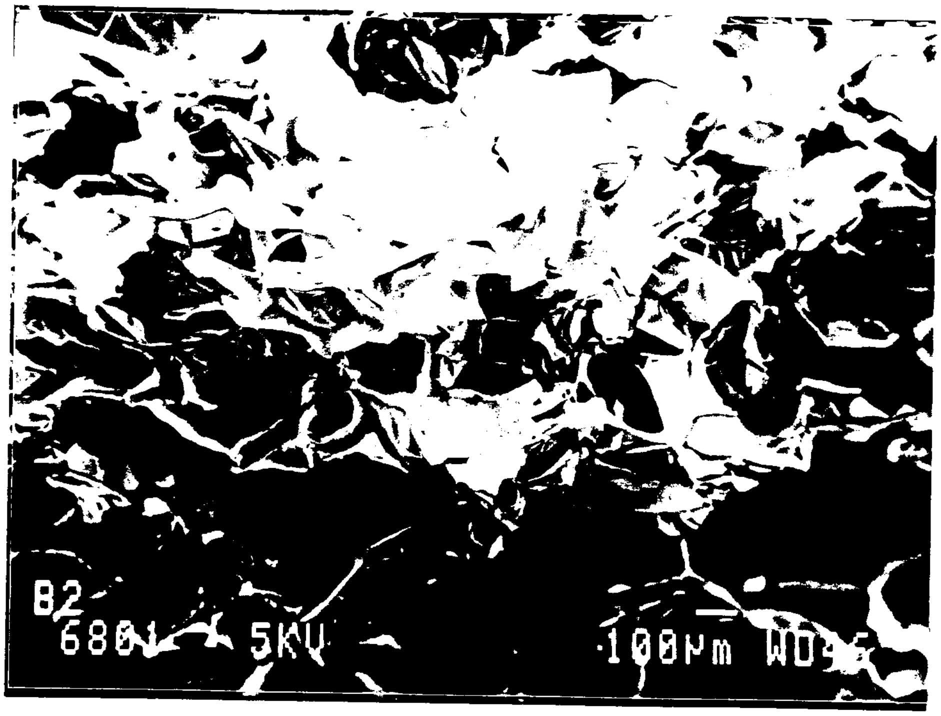


FIG.5a

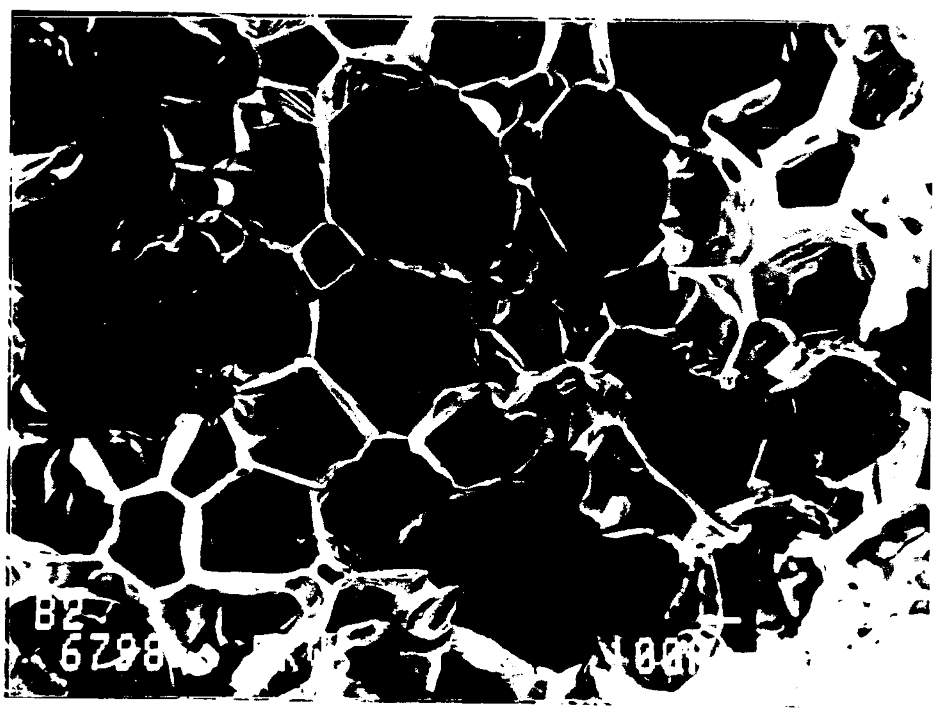


FIG.5b

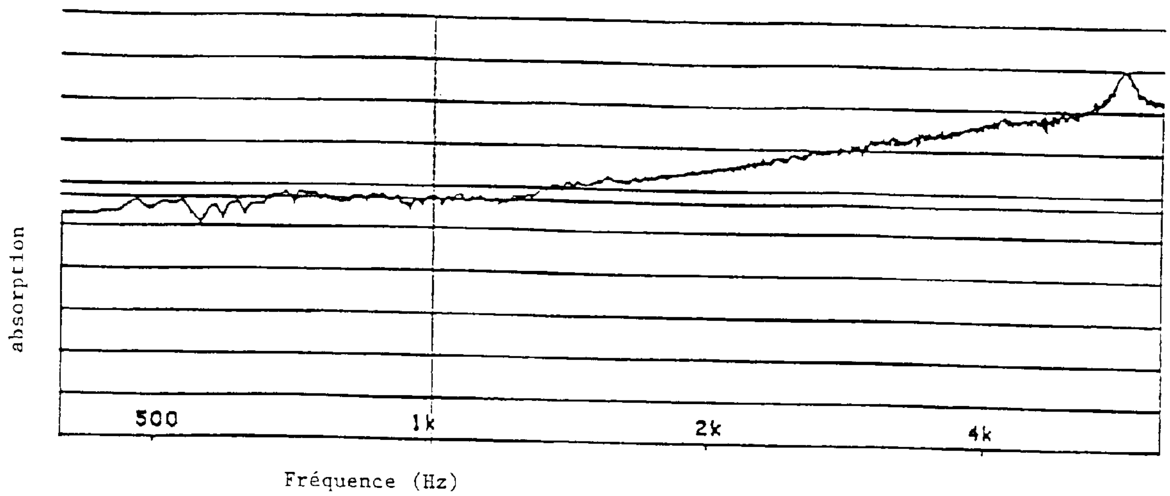
absorption
500
1k
2k
4k
Fréquence (Hz)

FIG.6

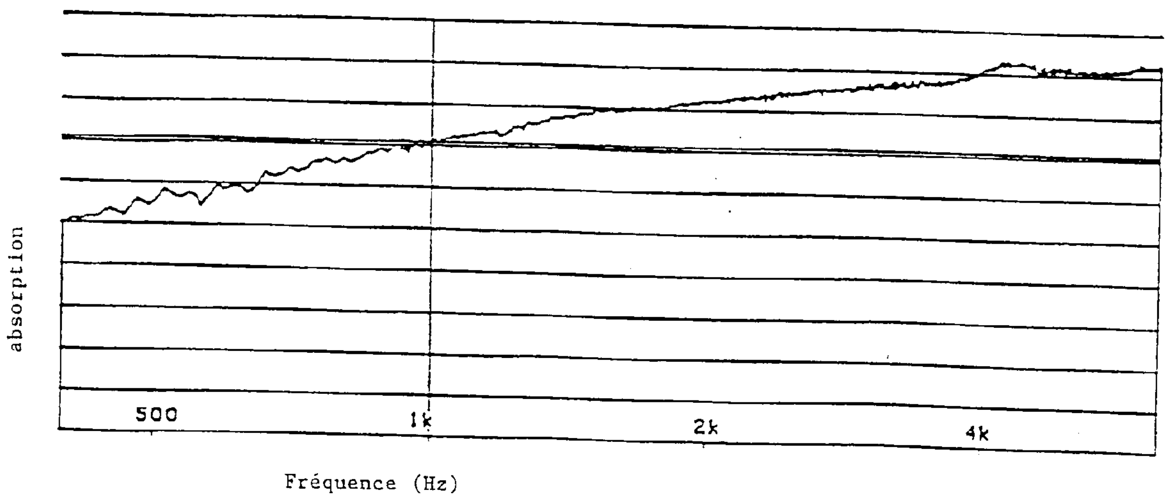
absorption
500
1k
2k
4k
Fréquence (Hz)

FIG.7

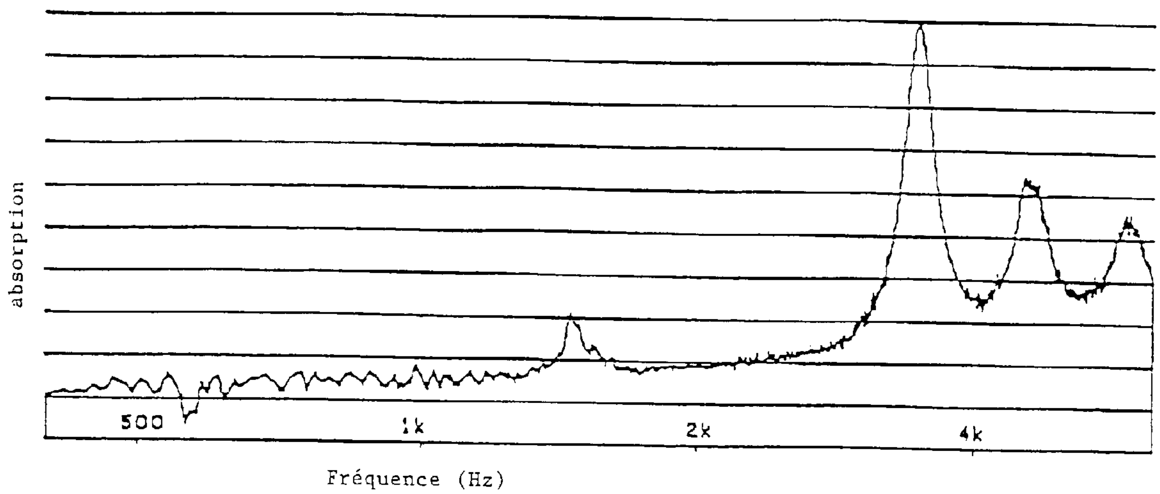
absorption
500
1k
2k
4k
Fréquence (Hz)

FIG.8

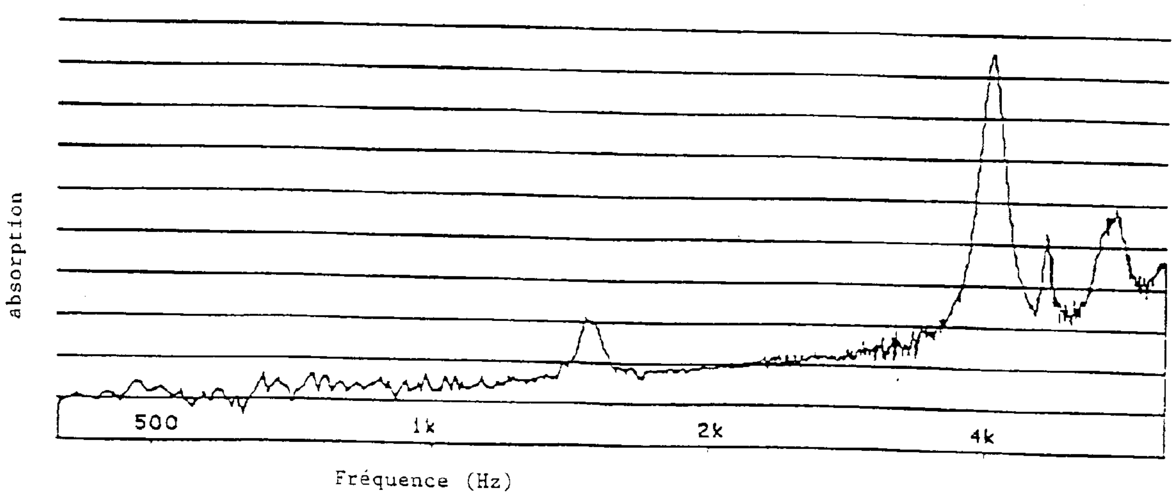
absorption
500
1k
2k
4k
Fréquence (Hz)

FIG.9

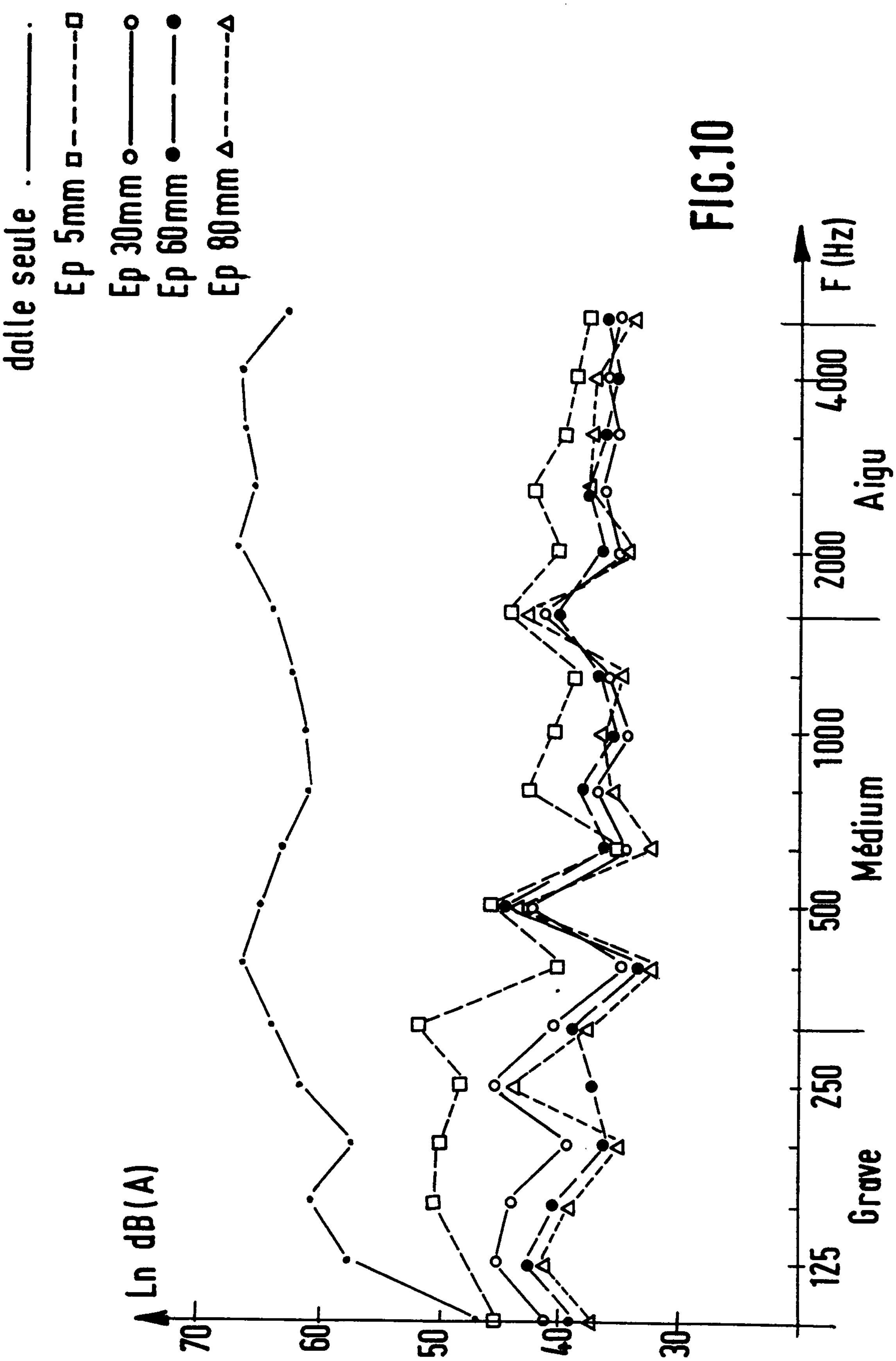
Ln dB(A)
70
60
50
40
30
125
250
500
1000
2000
4000
F (Hz)
Grave
Médium
Aigu
dalle seule
Ep 5mm
Ep 30mm
Ep 60mm
Ep 80mm

FIG.10

Office européen des brevets

# RAPPORT DE RECHERCHE EUROPEENNE

Numero de la demande
EP 93 40 3213

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | JOURNAL OF FIRE SCIENCES, vol.3, no.1, Février 1985, WESTPORT, CONNECTICUT US pages 35 - 52 P. WALCH ET AL. 'Fire behavior of PUR and PIR foams with a halogenated polyetherpolyol acting as a permanent active fire retardant' * page 36, paragraphe "chemicals"; page 37, tableau 1; page 40, tableau 3 * | 1,15-19, 21-23, 37,38 | C08G18/38 C08G18/50 C08G18/76 C08G18/48 //(C08G18/38, 101:00), (C08G18/48, 101:00), (C08G18/76, 101:00) |
| A | EP-A-0 078 445 (TAKEDA CHEMICAL INDUSTRIES) * page 7, lignes 26-32; exemple 2; pages 13, 14 * | 1,15,18, 19,37,38 | |
| A | EP-A-0 339 369 (DOW) * revendication 1 * | 1,21, 24-27, 37,38 | DOMAINES TECHNIQUES RECHERCHES (Int.Cl.5) |
| A | CHEMICAL ABSTRACTS, vol. 97, no. 16, 18 Octobre 1982, Columbus, Ohio, US; abstract no. 129288g, * abrégé * & JP-A-57 066 953 (MITSUI NISSO URETHANE K. K.) 23 Avril 1982 | 1,21-23, 37,38 | C08G |
| A | CHEMICAL ABSTRACTS, vol. 96, no. 12, 22 Mars 1982, Columbus, Ohio, US; abstract no. 86478d, * abrégé * & JP-A-56 136 830 (HITACHI CHEMICAL CO.) 26 Octobre 1981 | 1,19,21, 23,37,38 | |

Le présent rapport a été établi pour toutes les revendications

| Lieu de la recherche | Date d'achèvement de la recherche | Examinateur |
|---|---|---|
| BERLIN | 17 Mai 1994 | Hoepfner, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)